# EUROPEAN PATENT APPLICATION

(11) **EP 1 781 038 A2**
(43) Date of publication of application: **02.05.2007**
(21) Application number: 06021622.3
(22) Date of filing: 16.10.2006
(51) Int. Cl.: H04N 7/24

(54) **Method and apparatus for transmitting/receiving EPG in digital broadcasting system using frequency channels**

(30) Priority: 14.10.2005 KR 20050097230
(71) Applicant: Samsung Electronics Co., Ltd., Yeongtong-gu Suwon-si, Gyeonggi-do (KR)
(72) Inventor: Lee, Kyung-Ha c/o Samsung Electronics Co., Ltd.,, Suwon-si, Gyeonggi-do (KR); Lee, Kyung-Eun c/o Samsung Electronics Co. Ltd.,, Suwon-si, Gyeonggi-do (KR)
(74) Representative: Lang, Johannes

(57) **Abstract**

Disclosed is an apparatus and method for transmitting/receiving an EPG when a digital broadcasting system uses different frequency channels according to broadcasters. In the apparatus and method, the digital broadcasting system determines a first frequency channel for transmitting first EPG data for all broadcasting programs, transmits the first EPG data through the first frequency channel at a first data rate, and transmits second EPG data through second frequency channels at a second data rate less than the first data rate, the second EPG data including both broadcasting streams of a corresponding frequency channel and at least part of the first EPG data. A receiving terminal receives the first EPG data through the first frequency channel, or receives broadcasting program data through one of the second frequency channels and simultaneously receives the second EPG data to updates the first EPG data.

## Description

### BACKGROUND OF THE INVENTION

### 1. Field of the Invention

The present invention relates to a digital broadcasting system, and more particularly to a method and an apparatus for transmitting/receiving an Electronic Program Guide (EPG) when multiple frequency channels are used for a broadcasting service.

### 2. Description of the Related Art

Digital broadcasting systems provide a broadcasting information lists that are displayed on a receiving terminal. A user can select from the broadcasting information list and watch a desired broadcasting program. The broadcasting information list is created based on an EPG provided by a broadcasting station in order to help the channel selection of the user. A digital broadcasting receiving terminal receives an EPG transmitted from a broadcasting station, and creates and displays the broadcasting information list. Typically, an EPG provides channel information, titles, broadcasting time/date, other detailed information, etc., of programs, which are receivable by a user, through the Internet.

For example, a Terrestrial Digital Multimedia Broadcasting (TDMB) receiving terminal stores an EPG obtained by scanning all accessible channels in a nonvolatile memory such as a NAND flash memory, and acquires and displays a broadcasting information list from the EPG.

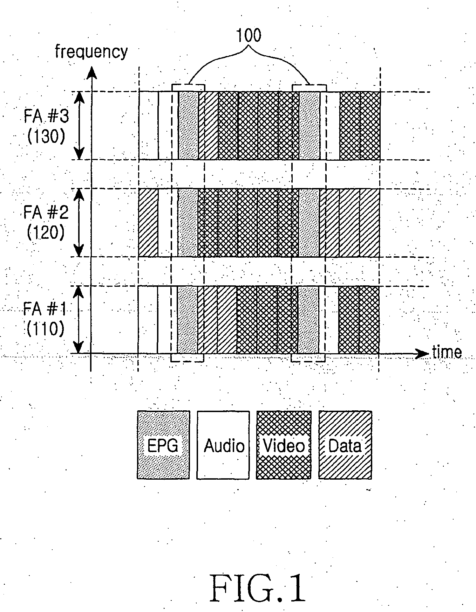

While viewing a broadcasting information list, users prefer to identify various broadcasters (in the case of a TDMB, they are identified by ensembles) and to identify multiple channels provided by each broadcaster. In the case of a TDMB, a separate frequency band (i.e. a frequency channel) is allocated to each broadcaster. Each broadcaster provides an EPG according to a Eureka-147 standard. The channel information according to broadcasters is provided through a Fast Information Group (FIG) including the service information of a corresponding broadcasting station. The name of a broadcaster allocated to each frequency band is provided through an ensemble label of a FIG 1/0, and information about sub-channels provided by each broadcasting station is provided through a program service label of a FIG 1/1. Accordingly, a digital broadcasting receiving terminal can provide a user with information (i.e. channel information) about ensembles and sub-channels by using the service information. The channel information may be displayed as follows: Korea Broadcast System (KBS) TV1; Munhwa Broadcast Center (MBC) VIDEO; Seoul Broadcast System (SBS) FM1; or MBC Transport Protocol Experts Group (TPEG).

Such an EPG has the following two important differences as compared to other digital broadcasting systems based on satellite DMB.

In a TDMB system, a broadcasting station transmits an EPG including only broadcasting channel information of a corresponding broadcasting station. However, an EPG of another digital broadcasting system may include broadcasting information of all broadcasters.

A TDMB system provides only basic broadcasting information about each broadcasting channel such as the name of a broadcaster and the name of a broadcasting channel through an EPG. However, an EPG of another digital broadcasting system may provide various supplementary information in addition to the basic broadcasting information such as channel names. For example, the EPG of a satellite DMB system provides a broadcasting time table in which the titles and summaries of broadcasting programs provided by each broadcasting station during the subsequent hour, subsequent several hours, day, week, etc., are displayed according to time, so that reservation recording, etc., is possible. In addition, preview data, etc., is allowed to be included in an EPG according to application methods, so that it is possible to provide various information about each broadcasting program. Moreover, it is also possible to transmit various types of advertisements through EPG data.

Therefore, in a broadcasting system using a Frequency Division Multiplexing (FDM) scheme such as a TDMB, it is necessary to provide a technology for transmitting supplementary information in addition to both broadcasting information about other broadcasting stations and basic information about broadcasting channels, in order to satisfy various demands of a user.

### SUMMARY OF THE INVENTION

Accordingly, the present invention has been made to solve at least the above-mentioned problems occurring in the prior art, and it is an aspect of the present invention to provide a method and an apparatus for transmitting/receiving various information through an EPG in a broadcasting system using a FDM scheme such as a TDMB.

It is another aspect of the present invention to provide a method and an apparatus for transmitting supplementary information in addition to both information about multiple broadcasting stations and basic information about broadcasting channels through EPGs provided according to broadcasters.

In accordance with one aspect of the present invention, there is provided a method for transmitting an Electronic Program Guide (EPG) in a digital broadcasting system using a plurality of frequency channels, the method includes determining a first frequency channel for transmitting first EPG data for all broadcasting programs provided by the digital broadcasting system; transmitting the first EPG data through the first frequency channel at a first data rate; and transmitting second EPG data through second frequency channels, except for the first frequency channel, at a second data rate less than the first data rate, the second EPG data including both broadcasting streams of a corresponding frequency channel and at least part of the first EPG data.

In accordance with another aspect of the present invention, there is provided a method for receiving an Electronic Program Guide (EPG) in a digital broadcasting system using a plurality of frequency channels, the method includes recognizing a first frequency channel for transmitting first EPG data for all broadcasting programs provided by the digital broadcasting system; receiving the first EPG data through the first frequency channel at a first data rate; receiving broadcasting program data through a second frequency channel, which has been allocated to a broadcaster desired by a user, according to the first EPG data; and receiving second EPG data including at least part of the first EPG data through the second frequency channel at a second data rate less than the first data rate while receiving the broadcasting program data.

In accordance with further another aspect of the present invention, there is provided an apparatus for transmitting an Electronic Program Guide (EPG) in a digital broadcasting system using a plurality of frequency channels, the apparatus includes a broadcasting control center for determining both a first data rate for a first frequency channel for transmitting first EPG data about all broadcasting programs provided by the digital broadcasting system, and a second data rate for different frequency channels, which is less than the first data rate; a first transmitter for transmitting the first EPG data through the first frequency channel at the first data rate; and a second transmitter for transmitting second EPG data through second frequency channels, except for the first frequency channel, at the second data rate, the second EPG data including both broadcasting streams of a corresponding frequency channel and at least part of the first EPG data.

In accordance with still another aspect of the present invention, there is provided an apparatus for receiving an Electronic Program Guide (EPG) in a digital broadcasting system using a plurality of frequency channels, the apparatus includes a Radio Frequency (RF) unit for receiving at least one of broadcasting program data and EPG data through an allocated frequency channel of the frequency channels; and a controller for controlling the RF unit so as to be tuned to a first frequency channel in order to receive first EPG data for all broadcasting programs provided by the digital broadcasting system, receiving the first EPG data through the first frequency channel at a first data rate, receiving broadcasting program data through a second frequency channel, which has been allocated to a broadcaster desired by a user, according to the first EPG data, and receiving second EPG data including at least part of the first EPG data through the second frequency channel at a second data rate less than the first data rate.

### BRIEF DESCRIPTION OF THE DRAWINGS

The above and other objects, features and advantages of the present invention will be more apparent from the following detailed description taken in conjunction with the accompanying drawings, in which:
FIG. 1 is a diagram illustrating the structure of a channel through which all broadcasters transmit EPG data at the same data rate according to the present invention;
FIG. 2 is a diagram illustrating the structure of a channel transmitting EPG data through a specific frequency band at a relatively high data rate according to the present invention;
FIG. 3 is a flow diagram illustrating the operation of a receiving terminal according to the present invention;
FIG. 4 is a flow diagram illustrating the operation of a receiving terminal according to the present invention;
FIG. 5 is a block diagram illustrating the construction of a broadcasting station transmitter according to the present invention; and
FIG. 6 is a block diagram illustrating the construction of a receiving terminal according to the present invention.

### DETAILED DESCRIPTION OF THE PREFERRED EMBODIMENT

Hereinafter, preferred embodiments according to the present invention will be described with reference to the accompanying drawings. In the following description of the present invention, a detailed description of known functions and configuration incorporated herein will be omitted when it may make the subject matter of the present invention rather unclear. Terms described in the following description are defined by taking functions thereof into consideration, so they may vary according to the intention of a user and an operator or depending on custom.

The subject matter of the present invention is directed to transmit/receive various information through an EPG in a digital broadcasting system using a FDM scheme, and to ensure the maximum number ofbroadcastable programs within the limited resources (frequencies) while improving the transmission/reception speed of an EPG.

The present invention will be described in detail by using a TDMB system. Further, an EPG transmission/reception method, which is the basic purpose of the present invention, can be applied to any broadcasting systems having similar technical background and channel type through slight modification without departing from the scope and spirit of the invention. This can be determined by those skilled in the art.

FIG. 1 is a diagram illustrating the structure of a channel through which all broadcasters transmit EPG data at the same data rate according to the present invention. The EPG data includes basic broadcasting information about broadcaster names and broadcasting channel names of broadcasting programs for all broadcasting stations, together with various supplementary information.

Referring to FIG. 1, Frequency Assignments (FAs) 110, 120 and 130 representing the frequency channels of different frequency bands are allocated to different broadcasters so as to carry EPG data, audio data, video data and supplementary data of a corresponding broadcasting station. Each broadcasting station transmitter divides the allocated FA into multiple time slots, and time-division multiplexes and transmits the EPG data, audio data, video data, supplementary data, etc. The EPG data is transmitted during the same time slot 100 in each FA, and the EPG data transmitted in each FA has the same content.

A receiving terminal accesses a FA allocated to a desired broadcasting station and receives EPG data, and then receives a broadcasting service through a corresponding FA. In such a case, since the EPG data includes the basic broadcasting information about all broadcasting stations and supplementary information (e.g. future broadcasting information, advertisements, preview data, etc.), the receiving terminal can receive the broadcasting information about all broadcasting stations in one FA without frequency change.

For example, in the case of TDMB broadcasting, each FA has a bandwidth of 1.536 MHz, and a valid data rate within each bandwidth is 0.8 to 1.7 Mbps. However, the valid data rate is limited below about 1.2 Mbps when considering an error correction code rate. In the case of a Moving Picture Experts Group (MPEG) layer 2 audio of a Compact Disc (CD) quality requiring 192 Kbps, six audio programs can be provided in each FA. In the case of a MPEG-4 video of 30 frames per second, requiring 600 Kbps, two video programs can be provided in each FA. That is, each FA cannot broadcast more than two video programs. When broadcasting more than two video programs, it is impossible to broadcast audio programs.

As with the example, a broadcasting station transmits EPG data through the same frequency resources while outputting the broadcasting programs by using a corresponding allocated frequency resource. In such a case, it is impossible to support a high data rate for the EPG data, and thus more time is required for a receiving terminal to receive all the EPG data.

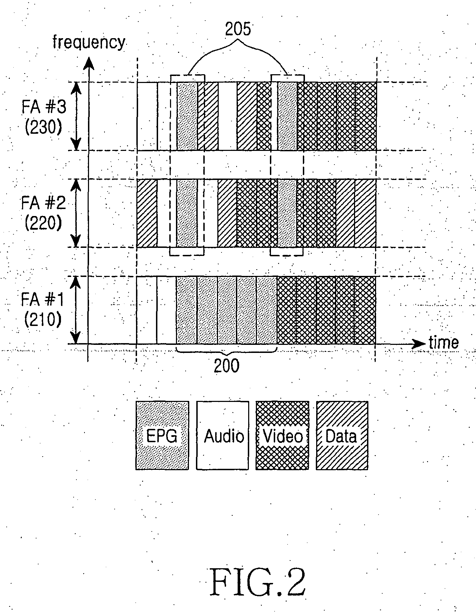

FIG. 2 is a diagram illustrating the structure of a channel transmitting EPG data through a specific frequency band at a relatively high data rate according to another embodiment of the present invention.

Referring to FIG. 2, FAs 210, 220 and 230 representing the frequency channels of different frequency bands are allocated to different broadcasters so as to carry EPG data, audio data, video data and supplementary data of a corresponding broadcasting station. Each broadcasting station transmitter divides the allocated FA into multiple time slots, and time-division multiplexes and transmits the EPG data, audio data, video data, supplementary data, etc. The EPG data is transmitted in specific FAs, e.g. the remaining FAs 220 and 230 excluding the FA 210, at the same data rate 205. In the FA 210, the EPG data is transmitted at a data rate 200 greater than that of the remaining FAs 220 and 230.

In a first example, the EPG data transmitted in each FA has the same content. However, the data rates are different in both the FA 210 and the FAs 220 and 230. That is, in the FAs 220 and 230, the EPG data is transmitted at a data rate less than that of the FA 210.

A receiving terminal accesses a FA allocated to a desired broadcasting station and receives EPG data, and then receives a broadcasting service through a corresponding FA. In such a case, since the EPG data includes the basic broadcasting information about all broadcasting stations and supplementary information (e.g. future broadcasting information, advertisements, preview data, etc.), the receiving terminal can receive the broadcasting information about all broadcasting stations in one FA without frequency change. The receiving terminal can receive the EPG data through the FA 210 at a higher data rate. The FA 210 in which the EPG data is transmitted is fixedly determined according to broadcasting policies, or may be notified to the receiving terminal whenever it is determined.

In a second example, the EPG data transmitted through the FA 210 includes broadcasting information about all broadcasting programs broadcasted through all the FAs 210, 220 and 230, and the EPG data transmitted through the FAs 220 and 230 includes broadcasting information about broadcasting programs broadcasted through the corresponding FAs 220 and 230. The EPG data transmitted through the FA 220 includes broadcasting information about broadcasting programs of the FA 220, and the EPG data transmitted through the FA 230 includes broadcasting information about broadcasting programs of the FA 230.

In another example, the EPG data transmitted through the FA 210 includes broadcasting information about all broadcasting programs broadcasted through all the FAs 210, 220 and 230, and the EPG data transmitted through the FAs 220 and 230 includes the altered content of the EPG data. The EPG data transmitted through the FAs 220 and 230 includes broadcasting information altered at a corresponding transmission point in time. In such a case, a receiving terminal first receives all the EPG data through the FA 210, stores the received EPG data, and then updates the stored EPG data through broadcasting information transmitted through the FA 220 or 230.

In the second embodiment as described above, the broadcasting system using different frequency channels according to broadcasting stations transmits EPG data including the broadcasting information and supplementary information of all broadcasting stations through a specific frequency channel at a high data rate. EPG data may exist in the specific frequency channel together with broadcasting program data. In one example, in order to transmit all the EPG data at a high data rate, a transmitter can occupy most time slots of the specific frequency channel and transmit the EPG data.

Further, broadcasting station transmitters using the remaining frequency channels partially transmit the EPG data at a low data rate if possible, thereby maximally ensuring a data rate of broadcasting program data. In one example, in order to partially transmit the EPG data at the low data rate, a transmitter can divide the EPG data into a plurality of blocks, and transmit the blocks over multiple transmission time slots. In another example, a transmitter can occupy few time slots of the remaining frequency channels and transmit the EPG data. That is, in the present invention, it should be understood that the low data rate includes both transmission of the EPG data in a small size and transmission of the EPG data through occupation of few time slots.

In this way, other broadcasting station transmitters transmit the EPG data at a low data rate, so that a receiving terminal can receive the EPG data through a background task while displaying a desired broadcasting program, and can update the received EPG data. The background task signifies that the receiving terminal detects blocks of EPG data transmitted in a time division manner while receiving a desired broadcasting program through one frequency channel. The receiving terminal continues to play the broadcasting program, thereby preventing a user from recognizing the detection of the EPG data. That is, while the EPG data is received at a low data rate, the receiving terminal simultaneously processes the video data and EPG data of the broadcasting program through multitasking, etc.

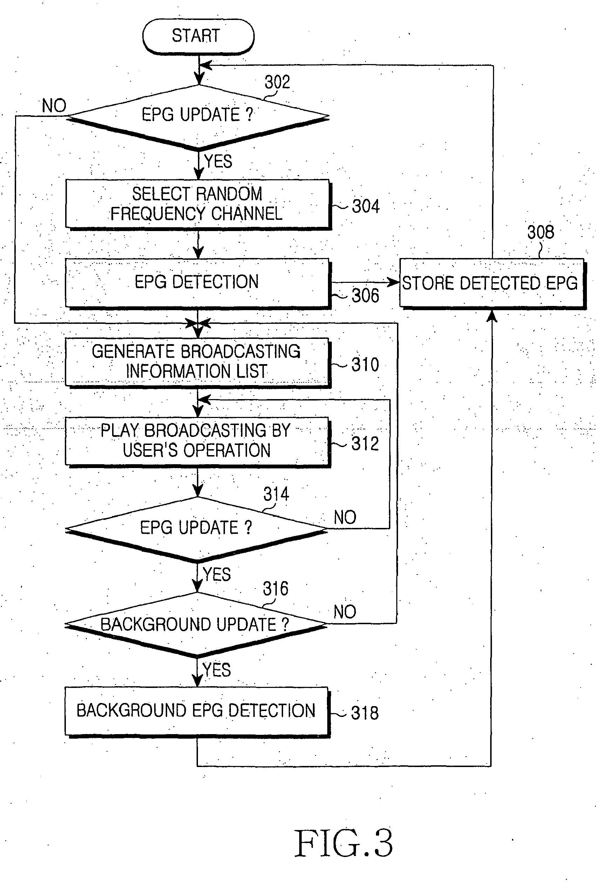

FIG. 3 is a flow diagram illustrating the operation of the receiving terminal according to the present invention.

Referring to FIG. 3, in step 302, the receiving terminal determines if the update of EPG data is necessary. The receiving terminal determines if the update of EPG data is necessary through periodic signaling or signaling from a broadcasting system, or a user's request. If the update of EPG data is necessary, the receiving terminal selects a random frequency channel from multiple frequency channels through which broadcasting is receivable in step 304. The reason for selecting the random frequency channel instead of a specific frequency channel is because all broadcasting stations transmit EPG data of the same content. In step 306, the receiving terminal detects EPG data through the selected frequency channel. In step 308, the detected EPG data is automatically stored in an internal memory or stored therein by user's selection.

In step 310, the receiving terminal generates a broadcasting information list based on the detected EPG data, and outputs the broadcasting information list so that a user can recognize it. In step 312, when a user operates the broadcasting information list, e.g. when the user requests the display of a certain broadcasting program, the receiving terminal tunes the frequency channel to the broadcasting program selected by the user, and receives and plays the data of the broadcasting program.

In step 314, the receiving terminal can continuously determine if the update of the EPG data is necessary while playing the broadcasting program. When it is determined that the update of the EPG data is necessary, the receiving terminal determines whether to receive the EPG data through the background task according to the user' s selection or a preset setup in step 316. If a user wants to watch the broadcasting information list based on the EPG data without the background task, step 310 is performed. However, if it is determined to perform the background task, the receiving terminal receives the EPG data through the background task, and updates the stored EPG data, in step 318. That is, the receiving terminal receives the EPG data in a time slot allocated to the EPG data while continuing to receive the data of the broadcasting program. The stored EPG data may be displayed at the user's request.

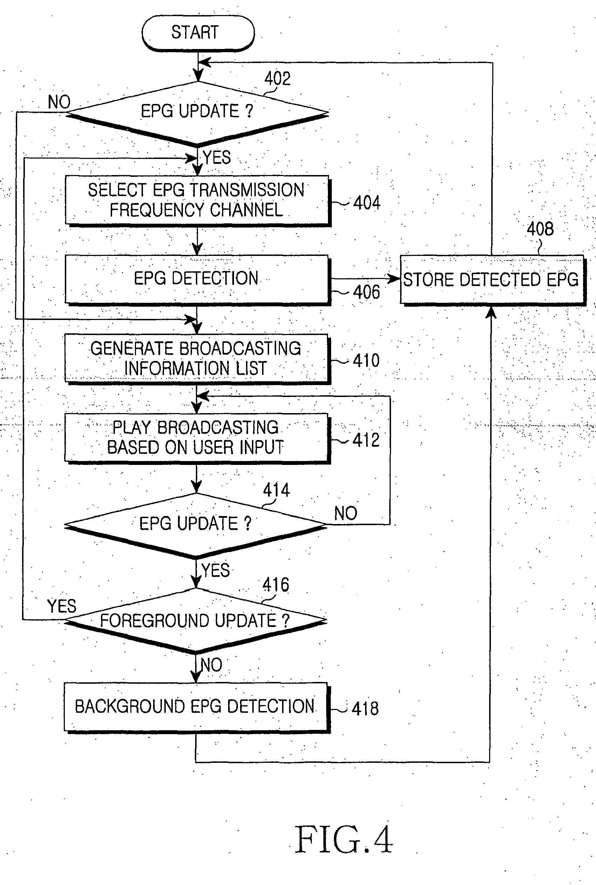

FIG. 4 is a flow diagram illustrating the operation of the receiving terminal according to another embodiment of the present invention.

Referring to FIG. 4, in step 402, the receiving terminal determines if the update of EPG data is necessary. Herein, the receiving terminal determines if the update of EPG data is necessary through periodic signaling or signaling from a broadcasting system, or a user's request. If the update of EPG data is necessary, the receiving terminal selects a preset specific frequency channel, i.e. an EPG transmission frequency channel, in step 404. Herein, the EPG transmission frequency channel may be preset by broadcasting policies, or may be notified from a system through signaling. In step 406, the receiving terminal detects EPG data through the EPG transmission frequency channel. For example, the receiving terminal detects the EPG data in the time slot 200 to which the EPG data of the EPG transmission frequency channel is allocated according to the channel structure of FIG. 2. In step 408, the detected EPG data is automatically stored in an internal memory of the receiving terminal or stored therein by the user's selection, the detected EPG data including broadcasting information about broadcasting programs provided by the digital broadcasting system.

In step 410, the receiving terminal generates a broadcasting information list based on the detected EPG data, and outputs the broadcasting information list so that a user can recognize it. In step 412, when a user operates the broadcasting information list, e.g. when the user requests the display of a certain broadcasting program, the receiving terminal tunes the frequency channel to the broadcasting program selected by the user, and receives and plays the data of the broadcasting program.

In step 414, the receiving terminal can continuously determine if the update of the EPG data is necessary while playing the broadcasting program. When it is determined that update of the EPG data is necessary according to a preset period or at the user's request, the receiving terminal determines whether to receive the EPG data through the background task according to user' s selection or a preset setup in step 416. If a user wants to receive the EPG data through a foreground task after stopping the play of the broadcasting program without the background task, the receiving terminal quickly receives the EPG data by switching to the EPG transmission frequency channel in step 404.

However, if it is determined to perform the background task, the receiving terminal continues to receive the data of the broadcasting program, receives the EPG data in a time slot (e.g. the reference number 205 of FIG. 2) allocated to the EPG data of the frequency channel receiving the data of the broadcasting program, and updates the stored EPG data, in step 418. The stored EPG data may be displayed at the user's request. Herein, the receiving terminal continues to listen the frequency channel until receiving all blocks constituting EPG data for all frequency channels, or receives EPG data including only broadcasting information for broadcasting programs provided through the frequency channel and then updates the stored EPG data.

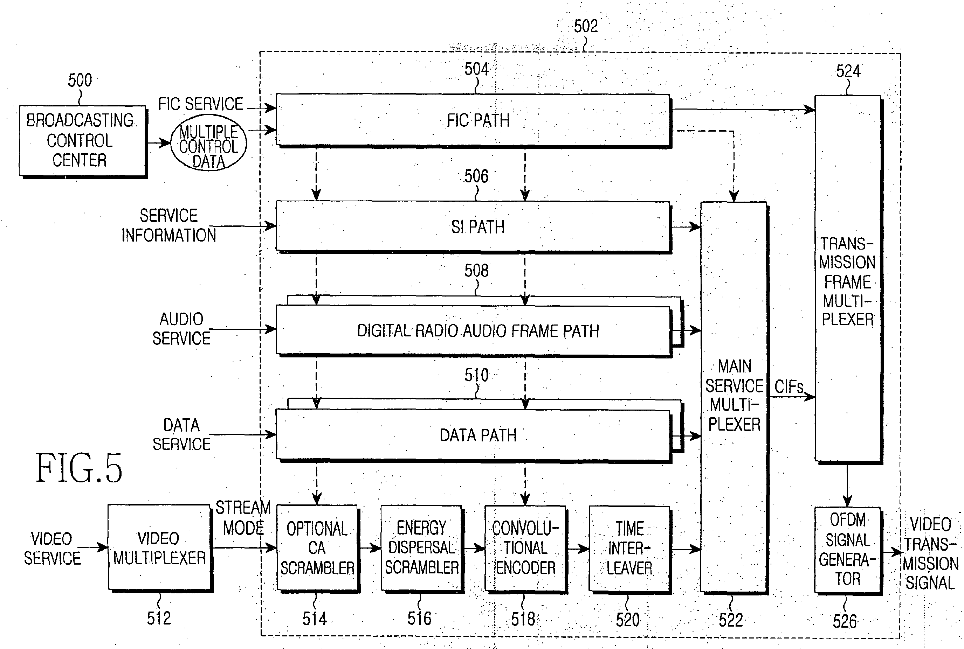

An EPG transmission apparatus according to the present invention includes a first broadcasting station transmitter for transmitting EPG data through an EPG transmission frequency channel at a relatively high data rate, and a second broadcasting station transmitter for transmitting EPG data at a relatively low data rate while transmitting broadcasting program data through other frequency channels. The first and second broadcasting station transmitters have the same construction, except for the content of transmission information. Hereinafter, the common construction of the first and second broadcasting station transmitters will be described with reference to FIG. 5.

FIG. 5 is a block diagram illustrating the construction of the broadcasting station transmitter according to the present invention. FIG. 5 illustrates one broadcasting station transmitter taking charge of one broadcasting station, i.e. one ensemble.

Referring to FIG. 5, a broadcasting control center 500 determines service data rates of each broadcasting station transmitter. The broadcasting control center 500 determines service data rates of audio, video, data, etc., for each broadcasting station transmitter, and particularly determines an EPG data rate for all broadcasting station transmitters or a specific broadcasting station transmitter according to the first and second embodiments of the present invention. The data rate of EPG data transmitted through the frequency channel of each broadcasting station transmitter is determined in conjunction with the service data rates of audio, video, data, etc. The determination results are provided through a Fast Information Channel (FIC) path 504 of the transmitter 502 as multiple control data.

The FIC path 504 receives FIC data and the multiple control data to configure a format of a control information frame, provides the control information frame to a transmission frame multiplexer 524, and controls a main service multiplexer 522 according to the determined service data rates.

Service information includes multiple information required when a receiving terminal demultiplexes and decodes a plurality of multiplexed program streams, is configured into a format of information through a Service Information (SI) path 506, and then is provided to the main service multiplexer 522. Audio service data is configured into a format of an audio frame through a digital radio audio frame path 508, and then is provided to the main service multiplexer 522. Video service data is converted into compression streams by a video multiplexer 512, is configured into a video frame via an Optional CA (Conditional Access) scrambler 514, an energy dispersal scrambler 516, a convolutional encoder 518 and a time interleaver 520, and then is provided to the main service multiplexer 522.

Supplementary data is configured into a data frame through a data path 510, and then is provided to the main service multiplexer 522. The supplementary data includes the whole or part of EPG data according to the present invention. At least one of the audio service data and the video service data may or may not be transmitted depending on the data rates of the EPG data.

When an EPG transmission frequency channel is allocated to the broadcasting station transmitter illustrated in FIG. 5, the broadcasting station transmitter inserts all of the EPG data into the supplementary data, and transmits the EPG data. However, when a frequency channel other than an EPG transmission frequency channel is allocated to the broadcasting station transmitter, the broadcasting station transmitter inserts the part of the EPG data into the supplementary data, and transmits the EPG data. The part of the EPG data corresponds to broadcasting information about broadcasting programs provided by the broadcasting station transmitter, or the part of EPG data about all broadcasting programs of all frequency channels provided by a digital_broadcasting system.

The main service multiplexer 522 multiplexes the service frames, which are provided from the SI path 506, the digital radio audio frame path 508, the data path 510 and the time interleaver 520, according to control signals provided from the FIC path 504, and transfers the multiplexed frames to the transmission frame multiplexer 524 as Common Intermediate Formats (CIFs). The transmission frame multiplexer 524 multiplexes the FIC data, which are provided from the FIC path 504, and the CIFs so as to generate a transmission frame. The transmission frame is converted into Orthogonal Frequency Division Multiplexing (OFDM) signals through Inverse Fast Fourier Transform (IFFT) by an OFDM signal generator 526, and is transmitted through a previously allocated frequency channel in a Radio Frequency (RF) unit (not shown).

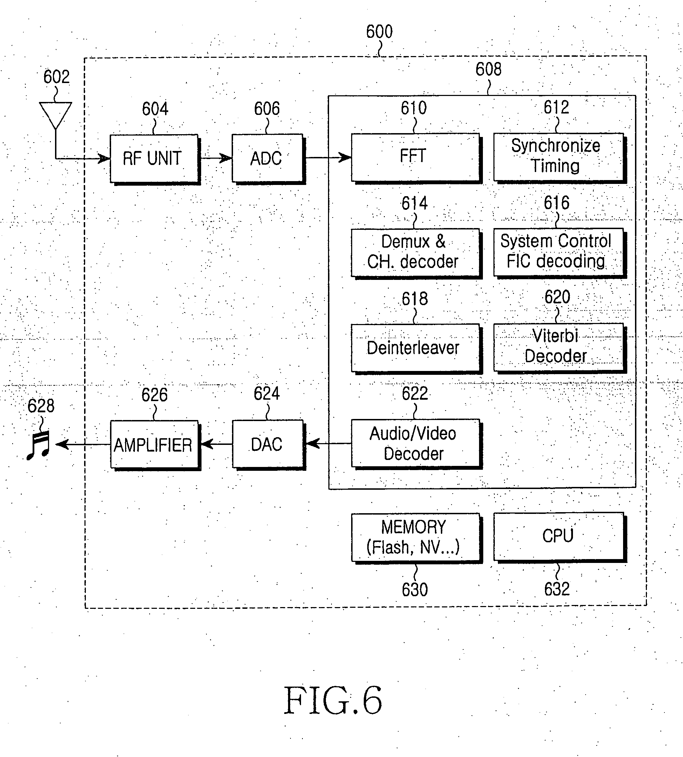

FIG. 6 is a block diagram illustrating the construction of the receiving terminal according to the present invention.

Referring to FIG. 6, a Central Processing Unit (CPU) 632 determines if an EPG update is necessary by a preset period or external signals (from a user or a system). If the EPG update is necessary, the CPU 632 selects a random frequency channel or an EPG transmission frequency channel. The EPG transmission frequency channel is preset or is designated by a system. An RF unit 604 tunes to the selected frequency channel and receives signals of a corresponding frequency channel. The received signals are converted into digital signals by an Analog-to-Digital Converter (ADC) 606, and are input to a digital signal processor 608.

The digital signal processor 608 includes an FFT unit 610, a synchronization timing unit 612, a demux/decoder 614, a system control FIC decoder 616, a deinterleaver 618, a viterbi decoder 620 and an audio/video decoder 622. The digital signal processor 608 detects both EPG data and audio/video data according to broadcasting programs from signals classified according to subcarriers by the FFT unit 610. If a user's request is input, the audio/video data is amplified by an amplifier 626 via a Digital-to-Analog Converter (DAC) 624, and is output through an output unit 628 in an audiovisual manner. Further, the EPG data is automatically stored in a memory 630 or stored therein at the user's request.

When an EPG update is required during the play of audio/video data, the CPU 632 changes the frequency channel setup of the RF unit 604 if necessary, and newly receives EPG data through a foreground task or a background task. In detail, the CPU 632 operates based on the flow diagram of FIG. 3 or 4 as described above, receives the EPG data, generates a broadcasting information list, and controls the elements of FIG. 6.

In the present invention as described above, a digital broadcasting system using different frequency channels according to broadcasting stations can transmit EPG data through a frequency channel allocated to a specific broadcasting station at a high speed without using a separate frequency channel. Further, the digital broadcasting system transmits EPG data of the same content through remaining frequency channels at a lower data rate, thereby causing a receiving terminal to receive the EPG data through a background task while receiving a desired broadcasting program.

Although preferred embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for transmitting an Electronic Program Guide (EPG) in a digital broadcasting system using a plurality of frequency channels, the method comprising the steps of:
determining a first frequency channel for transmitting first EPG data for all broadcasting programs provided by the digital broadcasting system;
transmitting the first EPG data through the first frequency channel at a first data rate; and
transmitting second EPG data through second frequency channels at a second data rate less than the first data rate, the second EPG data including both broadcasting streams of a corresponding frequency channel and at least part of the first EPG data.

2. The method as claimed in claim 1, wherein the frequency channels have been allocated to different broadcasters.

3. The method as claimed in claim 1, further comprising transmitting a broadcasting stream of a broadcaster, to which the first frequency channel has been allocated, through the first frequency channel together with the first EPG data.

4. The method as claimed in claim 1, wherein the second EPG data corresponds to broadcasting information about broadcasting programs transmitted through the second frequency channels through which the second EPG data is transmitted.

5. The method as claimed in claim 1, wherein the second EPG data corresponds to altered broadcasting information of the first EPG data.

6. A method for receiving an Electronic Program Guide (EPG) in a digital broadcasting system using a plurality of frequency channels, the method comprising the steps of:
recognizing a first frequency channel for transmitting first EPG data for all broadcasting programs provided by the digital broadcasting system;
receiving the first EPG data through the first frequency channel at a first data rate;
receiving broadcasting program data through a second frequency channel, which has been allocated to a broadcaster desired by a user, according to the first EPG data; and
receiving second EPG data including at least part of the first EPG data through the second frequency channel at a second data rate less than the first data rate while receiving the broadcasting program data.

7. The method as claimed in claim 6, after receiving the broadcasting program data, further comprising switching to the first frequency channel, receiving the first EPG data at the first data rate, and updating the first EPG data.

8. The method as claimed in claim 6, wherein the frequency channels have been allocated to different broadcasters.

9. The method as claimed in claim 6, further comprising receiving a broadcasting stream of a broadcaster, to which the first frequency channel has been allocated, through the first frequency channel together with the first EPG data.

10. The method as claimed in claim 6, wherein the second EPG data corresponds to broadcasting information about broadcasting programs transmitted through the second frequency channel through which the second EPG data is transmitted.

11. The method as claimed in claim 6, wherein the second EPG data corresponds to altered broadcasting information of the first EPG data.

12. The method as claimed in claim 6, further comprising generating a broadcasting information list by using the first EPG data, and updating the broadcasting information list by using the second EPG data.

13. An apparatus for transmitting an Electronic Program Guide (EPG) in a digital broadcasting system using a plurality of frequency channels, the apparatus comprising:
a broadcasting control center for determining both a first data rate for a first frequency channel for transmitting first EPG data about all broadcasting programs provided by the digital broadcasting system, and a second data rate for different frequency channels, which is less than the first data rate;
a first transmitter for transmitting the first EPG data through the first frequency channel at the first data rate; and
a second transmitter for transmitting second EPG data through second frequency channels at the second data rate, the second EPG data including both broadcasting streams of a corresponding frequency channel and at least part of the first EPG data.

14. The apparatus as claimed in claim 13, wherein the frequency channels have been allocated to different broadcasters.

15. The apparatus as claimed in claim 13, wherein a broadcasting stream of a broadcaster, to which the first frequency channel has been allocated, is transmitted through the first frequency channel together with the first EPG data.

16. The apparatus as claimed in claim 13, wherein the second EPG data corresponds to broadcasting information about broadcasting programs transmitted through the second frequency channels through which the second EPG data is transmitted.

17. The apparatus as claimed in claim 13, wherein the second EPG data corresponds to altered broadcasting information of the first EPG data.

18. An apparatus for receiving an Electronic Program Guide (EPG) in a digital broadcasting system using a plurality of frequency channels, the apparatus comprising:
a Radio Frequency (RF) unit for receiving at least one of broadcasting program data and EPG data through an allocated frequency channel of the frequency channels; and
a controller for controlling the RF unit to be tuned to a first frequency channel to receive first EPG data for all broadcasting programs provided by the
digital broadcasting system, receiving the first EPG data through the first frequency channel at a first data rate, receiving broadcasting program data through a second frequency channel, which has been allocated to a broadcaster desired by a user, according to the first EPG data, and receiving second EPG data including at least part of the first EPG data through the second frequency channel at a second data rate less than the first data rate.

19. The apparatus as claimed in claim 18, wherein the controller controls the RF unit to switch to the first frequency channel after receiving the broadcasting program data, receives the first EPG data through the first frequency channel at the first data rate, and updates the first EPG data.

20. The apparatus as claimed in claim 18, wherein the frequency channels have been allocated to different broadcasters.

21. The apparatus as claimed in claim 18, wherein the controller receives a broadcasting stream of a broadcaster, to which the first frequency channel has been allocated, through the first frequency channel together with the first EPG data.

22. The apparatus as claimed in claim 18, wherein the second EPG data corresponds to broadcasting information about broadcasting programs transmitted through the second frequency channel through which the second EPG data is transmitted.

23. The apparatus as claimed in claim 18, wherein the second EPG data corresponds to altered broadcasting information of the first EPG data.

24. The apparatus as claimed in claim 18, wherein the controller generates a broadcasting information list by using the first EPG data, and updates the broadcasting information list by using the second EPG data.
